# EUROPEAN PATENT APPLICATION

(11) **EP 2 690 074 A1**
(43) Date of publication of application: **29.01.2014**
(21) Application number: 12760114.4
(22) Date of filing: 22.03.2012
(51) Int. Cl.: C04B 7/43, F27B 17/00

(54) **SUSPENDED EXTERNAL-CIRCULATING DECOMPOSITION REACTOR HAVING HIGH SOLID-GAS RATIO**

(30) Priority: 24.03.2011 CN 201110071622
(71) Applicant: Xi'an University Of Architecture & Technology, Shaanxi 710055 (CN); Shaanxi Delong Cement High-Tech Development Limited Company, Xi'an, Shaanxi 710075 (CN)
(72) Inventor: XU, Delong, Xi'an, Shaanxi 710075 (CN); CHEN, Yanxin, Xi'an, Shaanxi 710075 (CN); CHENG, Fuan, Xi'an, Shaanxi 710075 (CN); LI, Hui, Xi'an, Shaanxi 710075 (CN); LIU, Ningchang, Xi'an, Shaanxi 710075 (CN); WANG, Shijun, Xi'an, Shaanxi 710075 (CN); JIU, Shaowu, Xi'an, Shaanxi 710075 (CN); FENG, Shaohang, Xi'an, Shaanxi 710075 (CN)
(74) Representative: Hryszkiewicz, Danuta
(86) International application number: PCT/CN2012/072815
(87) International publication number: WO 2012/126384

(57) **Abstract**

A suspended external-circulating decomposition reactor having a high solid-gas ratio, comprising: a decomposition furnace (10), the lower portion of a furnace body (11) of the decomposition furnace (10) being disposed with a feed pipe (12), a coal injection pipe (13), and a hot-air inlet (14), a bottom end of the furnace body (11) having a smoke inlet (14), and a high-temperature thermal decomposition reaction being performed on cement raw material powder in a suspended state in the decomposition furnace (10); a cyclone separator (20), communicating with a top end of the decomposition furnace (10), and a bottom outlet of a conic body of the cyclone separator (20) being connected to a discharging pipe (23) of a cyclone, for primarily separating powder particles from a dusty gas flow; and a cyclone cylinder (30), communicating with an outlet of the cyclone separator (20), a side of the cyclone cylinder (30) being disposed with an air inlet (35), a top end of the cyclone cylinder (30) being disposed with an air outlet (31), and a bottom outlet of the cyclone cylinder (30) being connected to a discharging pipe (34) of the cyclone cylinder, for well separating powder particles from the dusty gas flow. The reactor substantially reduces the emission of SO₂ and NOₓ, implements material circulation external to the decomposition furnace, and improves thermal reliability, thermal efficiency, and reactivity of the system.

## Description

The invention relates to a kiln device in the cement industry, and more particularly to a suspended external-circulating decomposition reactor having a high solid-gas mass ratio.

During the production of the cement industry, the linear calciner is commonly used. Exhaust gas discharged from a kiln tail is injected into the calciner through a bottom thereof. Tertiary air is introduced from a front of the kiln into a conical section of a lower part of the calciner; the preheated raw meal after being dispersed is introduced into the lower part of the calciner from one point or multi-points; while the fuel is transported to the calciner body by pneumatic transportation. After series actions of dispersion, mix, combustion, decomposition, and transportation of the matter and the fuel inside the calciner, the decomposed raw meal is discharged out of the calciner accompanying with the hot exhaust gas.

A common calciner employs a rotary spray form inside the calciner body to prolong the staying time of the matter. However, the capability of prolonging the staying time of the matter inside the calciner body is limited. If fuel including the anthracite and the petroleum coke that have a high ignition temperature and are difficult for combustion, a limit staying time will result in combustion delay of the fuel. Part of incompletely combusted continues being combusted in the lowest cyclone, which easily causes coking and blockage accidents in the cyclone cone and the discharging pipe. Furthermore, in the bottom of the calciner, hot exhaust gas, hot air, the matter, powdered coal, coal feeding wind are instantly mixed, heat-transferred, combusted, and reacted inside a limited space, and the coking and blockage accidents occur in the bottom of the calciner due to the sharp fluctuation of local temperature.

How to prolong the staying time of the matter inside the calciner on the premise of not increasing the capacity of the calciner, and to improve the thermal stability, the burnout rate of the fuel inside the calciner thereby ensuring the apparent decomposition rate is desired by cement production companies.

In view of the above-described problems, it is one objective of the invention to provide a suspended external-circulating decomposition reactor having a high solid-gas mass ratio. The reactor overcomes shortages existing in present high temperature decomposition devices for cement raw meal, thereby realizing the external-circulating decomposition of the matter, improving the thermal stability, the thermal efficiency, and the reaction rate of the system.

To achieve the above objective, technical schemes of the invention are as follows:

A suspended external-circulating decomposition reactor having a high solid-gas mass ratio, comprises: a calciner 10, the calciner 10 comprising a calciner body 11, a feeding pipe 12, a coal injection pipe 13, a hot air inlet 15, and an exhaust gas inlet 14. The feeding pipe 12, the coal injection pipe 13, and the hot air inlet 15 are arranged on a lower part of the calciner body 11. The exhaust gas inlet 14 is arranged on a bottom of the calciner body 11.

A cyclone separator 20 communicates with a top of the calciner 10. Exhaust gas containing dust enters tangentially the cyclone separator 20 from the calciner 10. The conical bottom outlet of the cyclone separator 20 is connected to the first discharging pipe 23.

A cyclone 30 is connected to the outlet of the cyclone separator 20, and the exhaust gas containing dust enters the cyclone 30 tangentially from the gas inlet 35 of the cyclone 30. The gas outlet 31 of the cyclone 30 is arranged on a top of the cyclone 31. The bottom outlet of the cyclone 30 is connected to the second discharging pipe 34.

The matter is discharged out of a conical bottom outlet of the cyclone separator through the first discharging pipe 23 and fed into the lower part of the calciner 10 for realizing a selective outer loop of the matter. The matter after complete reaction in the calciner 10 is transported to the cyclone 30 and to a subsequent process after gas-solid separation.

As an improvement, a neck is arranged on the calciner body 11, and particularly arranged in the middle of the ascending section of the calciner body 11.

The first discharging pipe 23 is provided with a first discharging valve 22; and the second discharging pipe 33 is provided with a second discharging valve 34.

The conical bottom outlet of the cyclone separator 20 is provided with a first expansion bin 21 being connected to the first discharging pipe 23; and the bottom outlet of the cyclone 30 is provided with a second expansion bin 32 being connected to the second discharging pipe 34.

One or two feeding pipes 12 are provided and are distributed on one side or both sides of the lower part of the calciner body 11. A matter dispersion device is arranged on a lower end of the feeding pipe 12. One or two coal injection pipes 13 are provided and are distributed on one side or both sides of the lower part of the calciner body 11. The coal injection pipe 13 is single-channeled or multi-channeled. One or two hot air inlets 15 are provided and are distributed on one side or both sides of the lower part of the calciner body 11. The hot air inlet 15 employs a central inlet, an eccentric inlet, or a tangential inlet, and hot air enters the hot air inlet 15 at a flow rate of between 15 and 35 m/s. The exhaust gas enters the exhaust gas inlet 14 at a flow rate of between 20 and 45 m/s.

Compared with the prior art, advantages of the invention are summarized as follows:

1. The suspended external-circulating decomposition reactor having a high solid-gas mass ratio of the invention employs the external circulation of the matter to allow the matter that is multi-folds of the products to return to the calciner on the premise of not increasing the size of the calciner, and to allow the matter to pass through the high temperature calciner for several times, thereby largely prolonging the staying time inside the calciner, highly improving the decomposition rate of the cement raw meal, as well as improving the thermal efficiency of the system.

2. The suspended external-circulating decomposition reactor having a high solid-gas mass ratio of the invention prevents the relatively fine particles of the decomposed raw meal from being circulated inside the system for many times and the circulating matter from arbitrary diversion and not being differentiated. The circulating amount of the matter is controlled by the separation efficiency of the cyclone separator. The space utilization of the calciner is basically improved, the thermal capacity per unit volume inside the calciner is largely increased, temperature fluctuations inside the calciner is decreased, the system runs stably, and the operation thereof is much simple.

3. The suspended external-circulating decomposition reactor having a high solid-gas mass ratio of the invention has an increased gas-solid contact area as the amount of the active calcium oxide largely increase, so that the discharge of SO₂ and NOx are significantly lowered, thereby having environmental significance.

In summary, the invention has various advantages and practical values in the structure as well as the function of the product; the invention has significant progress in technology, and achieves excellent and practical effects.
FIG. 1 is a structure diagram of a suspended external-circulating decomposition reactor having a high solid-gas mass ratio the invention in accordance with Example 1;
FIG. 2 is a structure diagram of a suspended external-circulating decomposition reactor having a high solid-gas mass ratio the invention in accordance with Example 2; and
FIG. 3 is a structure diagram of a suspended external-circulating decomposition reactor having a high solid-gas mass ratio the invention in accordance with Example 3.

For further illustrating the invention, experiments detailing a suspended external-circulating decomposition reactor having a high solid-gas mass ratio are described hereinbelow combined with the drawings.

### Example 1

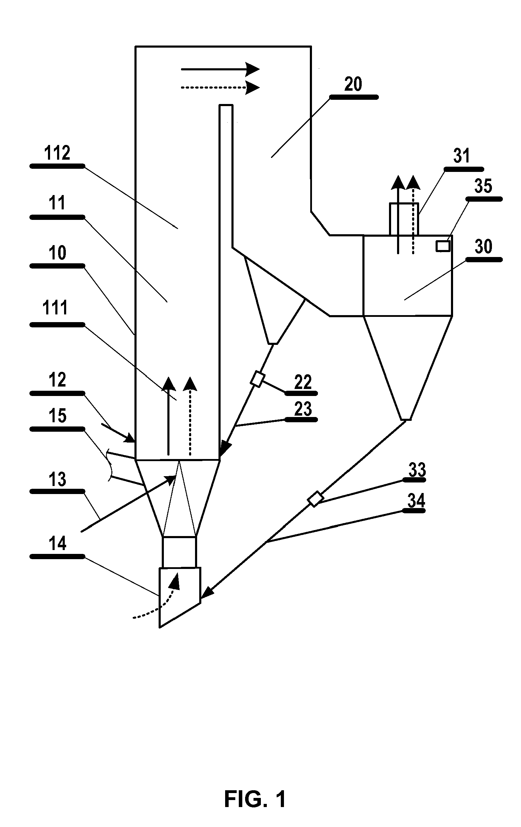

As shown in FIG. 1, a suspended external-circulating decomposition reactor having a high solid-gas mass ratio, comprises:

A calciner 10. The calciner 10 comprises a calciner body 11, a feeding pipe 12, a coal injection pipe 13, a hot air inlet 15, and an exhaust gas inlet 14. The feeding pipe 12, the coal injection pipe 13, and the hot air inlet 15 are arranged on a lower part of the calciner body 11. The exhaust gas inlet 14 is arranged on a bottom of the calciner body 11. Cement raw meal is allowed the high temperature decomposition reaction in a suspended state inside the calciner 10.

A cyclone separator 20 communicates with a top of the calciner 10. Exhaust gas containing dust enters tangentially the cyclone separator 20 from the calciner 10. The conical bottom outlet of the cyclone separator 20 is connected to the first discharging pipe 23. To prevent the gas flow from reverse crossflow, the first discharging pipe 23 is provided with a first discharging valve 22. The cyclone separator 20 has a separation efficiency being in a range of between 10% and 40%, and is capable of preliminarily separating the solid particles. The cyclone separator 20 allows the incompletely combusted powdered coal, the incompletely decomposed powdered raw meal, and the exhaust gas tangentially entering the cyclone separator 20 to rotate inside the cyclone separator 20. The powdered coal continues being combusted, and the raw meal continues being decomposed. The rotary motion is capable of prolonging the staying time of the gas flow, the matter, and the fuel in the high temperature area, and allows powdered particles to separate from the exhaust gas containing dust. The separated matter is allowed to enter a discharging cone, pass through the first discharging valve 22 and the first discharging pipe 23, and reach the lower part of the calciner body, so that the calciner 10 and the cyclone separator 20 form the external circulation system for realizing the external circulating of the matter.

A cyclone 30 is connected to the outlet of the cyclone separator 20, and the exhaust gas containing dust enters the cyclone 30 tangentially from the gas inlet 35 of the cyclone 30. The gas outlet 31 of the cyclone 30 is arranged on a top of the cyclone 30. The bottom outlet of the cyclone 30 is connected to the second discharging pipe 34. To prevent the gas flow from reverse crossflow, the second discharging pipe 34 is provided with a second discharging valve 33. The cyclone 30 has a relatively high separation efficiency (≥80%) and a function of separating the powdered particles from the exhaust gas containing dust. The matter after the gas-solid separation is discharged from a discharging exit, and enters to a consequent unit for calcinations after passing through the second discharging valve 33 and the second discharging pipe. The high temperature exhaust gas discharged from the gas outlet is used to preheat the raw meal.

The calciner body 11 comprises an injecting reaction zone 111 and a gas transporting reaction zone 112. The coal injection pipe 13 is disposed beneath the injection reaction zone 111, and the other end of the exhaust gas inlet 14 is connected to an exhaust gas exit of a rear of a rotary kiln.

One or two feeding pipes 12 are provided and are distributed on one side or both sides of the lower part of the calciner body 11; and a matter dispersion device is arranged inside the feeding pipe 12. One or two coal injection pipes 13 are provided and are distributed on one side or both sides of the cone of the lower part of the calciner body 11; and the coal injection pipe 13 is single-channeled or multi-channeled. One or two hot air inlets 15 are provided and are distributed on one side or both sides of the cone of the lower part of the calciner body 11; and the hot air inlet 15 employs a central inlet, an eccentric inlet, or a tangential inlet; and hot air enters the hot air inlet 15 at a flow rate of between 15 and 35 m/s for preventing the gas flow from inverse crossflow. The exhaust gas enters the exhaust gas inlet 14 at a flow rate of between 20 and 45 m/s.

The cyclone separator 20 is able to separate the incompletely decomposed particles, which are allowed to pass through the first discharging valve 22 and the first discharging pipe 23 and return to the calciner 10 to continue to be decomposed along with the newly fed raw meal, thus, an external circulation of the calciner is formed. The completely decomposed matter enters the cyclone 30 through the outlet of the cyclone separator 20. The cyclone 30 is connected to the outlet of the cyclone separator 30 and has a relatively high (≥80%) separation efficiency. The cyclone 30 transports the completely decomposed relatively fine particles to devices of consequent procedures through the second discharging valve 33 and the second discharging pipe 34. The gas outlet 31 of the cyclone 30 is arranged on an upper part thereof, and the exhaust gas produced from the decomposition of the cement raw meal enters a preliminary preheating system through the outlet 31 of the cyclone 30.

### Example 2

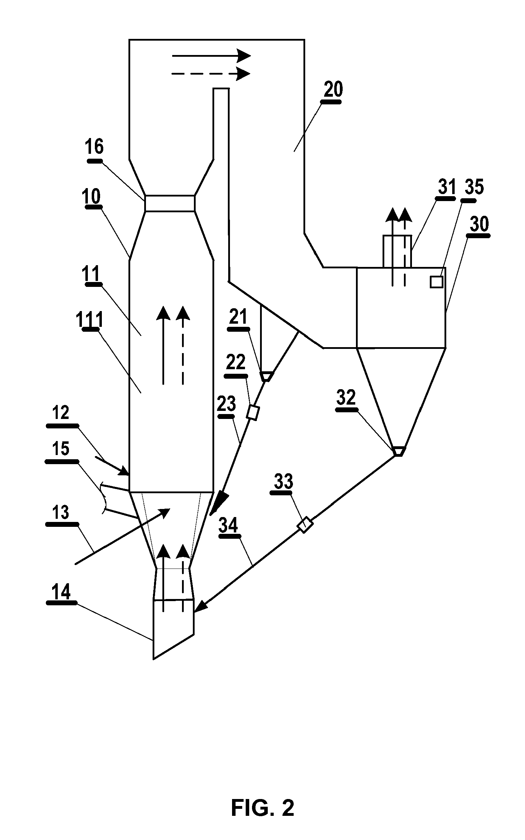

As shown in FIG. 2, the suspended external-circulating decomposition reactor having a high solid-gas mass ratio of this example further comprises a neck 16. The neck is arranged on a middle-upper part of the calciner body 11 of the calciner 10. The neck 16 is capable of intensifying the backmixing degree and the reaction process of the matter inside the calciner. Structures of other part of the reactor are the same as that in Example 1.

### Example 3

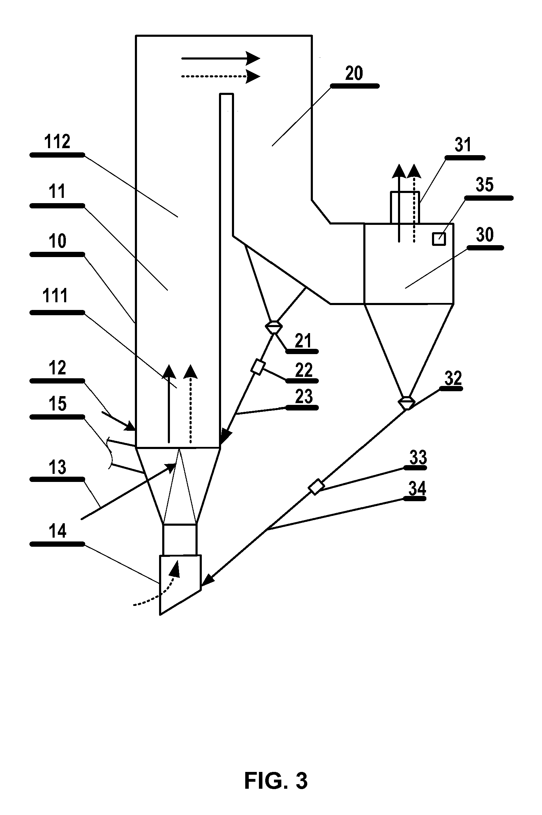

As shown in FIG. 3, in the suspended external-circulating decomposition reactor having a high solid-gas mass ratio of this example, the conical bottom outlet of the cyclone separator 20 is provided with a first expansion bin 21 for preventing the matter from blocking in a drainage exit. The first expansion bin is connected to the first discharging pipe 23 to prevent the inverse crossflow. The first discharging valve 22 is arranged on an upper part of the first discharging pipe 23 close to the first expansion bin 21. The bottom outlet of the cyclone 30 is provided with a second expansion bin 32 being connected to the second discharging pipe 34. Structures of other parts of the reactor are the same as that in Example 1.

The amount of the externally circulating matter and the inlet gas flow of the hot gas are controllable.

While particular embodiments of the invention have been shown and described, it will be obvious to those skilled in the art that changes and modifications may be made without departing from the invention in its broader aspects, and therefore, the aim in the appended claims is to cover all such changes and modifications as fall within the true spirit and scope of the invention.

## Claims

1. A suspended external-circulating decomposition reactor having a high solid-gas mass ratio, comprising:
a) a calciner (10), the calciner (10) comprising a calciner body (11), a feeding pipe (12), a coal injection pipe (13), a hot air inlet (15), and an exhaust gas inlet (14);
b) a cyclone separator (20), the cyclone separator (20) comprising an outlet, a conical bottom outlet, and a first discharging pipe (23); and
c) a cyclone (30), the cyclone (30) comprising a gas inlet (35), a gas outlet (31), a bottom outlet, and a second discharging pipe (34);
the feeding pipe (12), the coal injection pipe (13), and the hot air inlet (15) being arranged on a lower part of the calciner body (11); and the exhaust gas inlet (14) being arranged on a bottom of the calciner body (11);
the cyclone separator (20) communicating with a top of the calciner (10); exhaust gas containing dust entering tangentially the cyclone separator (20) from the calciner (10); the conical bottom outlet of the cyclone separator (20) being connected to the first discharging pipe (23);
the cyclone (30) being connected to the outlet of the cyclone separator (20), the exhaust gas containing dust entering the cyclone (30) tangentially from the gas inlet (35) of the cyclone (30); the gas outlet (31) of the cyclone (30) being arranged on a top of the cyclone (30); the bottom outlet of the cyclone (30) being connected to the second discharging pipe (34);
matter being discharged out of the conical bottom outlet of the cyclone separator (20) through the first discharging pipe (23) and fed into the lower part of the calciner (10) for realizing a selective outer loop of the matter; the matter after complete reaction in the calciner (10) being transported to the cyclone (30) and to a subsequent process after gas-solid separation.

2. The reactor of claim 1, **characterized in that** a neck is arranged on the calciner body (11).

3. The reactor of claim 1, **characterized in that** the first discharging pipe (23) is provided with a first discharging valve (22); and the second discharging pipe (34) is provided with a second discharging valve (33).

4. The reactor of claim 1, **characterized in that**
the conical bottom outlet of the cyclone separator (20) is provided with a first expansion bin (21) being connected to the first discharging pipe (23); and
the bottom outlet of the cyclone (30) is provided with a second expansion bin (32) being connected to the second discharging pipe (34).

5. The reactor of claim 1, **characterized in that**
one or two feeding pipes (12) are provided and are distributed on one side or both sides of the lower part of the calciner body (11);
one or two coal injection pipes (13) are provided and are distributed on one side or both sides of the lower part of the calciner body (11); and
one or two hot air inlets (15) are provided and are distributed on one side or both sides of the lower part of the calciner body (11).

6. The reactor of claim 5, **characterized in that** the hot air inlet (15) employs a central inlet, an eccentric inlet, or a tangential inlet.

7. The reactor of claim 1, 5, or 6, **characterized in that** hot air enters the hot air inlet (15) at a flow rate of between 15 and 35 m/s.

8. The reactor of claim 1, **characterized in that** the exhaust gas enters the exhaust gas inlet (14) at a flow rate of between 20 and 45 m/s.

9. The reactor of any of claims 1-6, **characterized in that** a matter dispersion device is arranged on a lower end of the feeding pipe (12).

10. The reactor of any of claims 1-6, **characterized in that** the coal injection pipe (13) is single-channeled or multi-channeled.
